# EUROPÄISCHE PATENTANMELDUNG

(11) **EP 1 860 548 A1**
(43) Veröffentlichungstag der Anmeldung: **28.11.2007**
(21) Anmeldenummer: 06010969.1
(22) Anmeldetag: 26.05.2006
(51) Int. Cl.: G06F 9/44

(54) **Verfahren zur Versionsverwaltung von Automatisierungsdaten eines Kraftwerk-Automatisierungssystems**

(71) Anmelder: SIEMENS AKTIENGESELLSCHAFT, 80333 München (DE)
(72) Erfinder: Kleyer, Dieter, 91074 Herzogenaurach (DE); Nolte, Raimund, 57413 Finnentrop (DE)

(57) **Zusammenfassung**

Die Erfindung betrifft ein Verfahren zur Versionsverwaltung von Automatisierungsdaten eines Kraftwerk-Automatisierungssystems (1), die auf miteinander vernetzten Plattformen (2, 3, 4, 5) des Kraftwerk-Automatisierungssystem (1) in unterschiedlichen Datenhaltungen abgelegt sind, bei dem Versionen wenigstens eines Datums der Automatisierungsdaten mittels eines geeigneten Werkzeugs in ein interoperables Format exportiert werden und die in Form eines interoperablen Formats vorliegenden Versionen mittels eines Versionsmanagementsystems (9) verwaltet werden.

## Beschreibung

### Hintergrund der Erfindung

Die Erfindung betrifft ein Verfahren zur Versionsverwaltung von Automatisierungsdaten eines Kraftwerk-Automatisierungssystems, die auf miteinander vernetzten Plattformen des Kraftwerk-Automatisierungssystem in unterschiedlichen Datenhaltungen abgelegt sind.

Prozessleitsysteme bzw. Automatisierungssysteme für die Steuerung und Automatisierung von Kraftwerken bestehen im allgemeinen aus einer Vielzahl einzelner Komponenten. Hierbei sind, neben der Feldebene mit den Sensoren und Aktoren, die Automatisierungsgeräte mit der I/O-Ebene, die Netzwerke mit den Kommunikationsprozessoren und die Bedien- und Beobachtungsebenen zu nennen.

Für das Engineering, den Betrieb und die Dokumentation von Automatisierungslösungen sind eine Vielzahl von Arbeitsschritten erforderlich, wobei die einzelnen Arbeitsschritte im allgemeinen durch Software-Werkzeuge (Tools) unterstützt werden. Diese Software-Werkzeuge, die historisch meist über einen langen Zeitraum entwickelt und gepflegt wurden, nutzen in der Regel unterschiedliche Plattformen mit jeweils eigenen Datenablagen. Mit Hilfe dieser heterogenen Datenhaltungen (File-Systeme, Datenbanken) werden die Dokumente und Daten verwaltet.

Die Dokumente und Daten unterliegen, beispielsweise während einer Projektlaufzeit (also während Planung, IBS, Betrieb und Wartung), häufigen Änderungen. Diese Änderungen, die sich über den gesamten Datenbestand eines Projekts erstrecken, sind bei aktuellen Kraftwerk-Automatisierungssystemen oft nicht mehr nachvollziehbar und frühere Arbeitszustände können oft nicht mehr konsistent reproduziert werden.

Gegenwärtig werden zumindest die Änderungen in einzelnen Teilsystemen, die meist auf unterschiedlichen Plattformen des Automatisierungssystems ausgebildet sind, durch Änderungskennzeichnung und durch Kopien der gesamten Datenhaltung eines Teilsystems verwaltet. Die Änderungsverwaltung und Konsistenzsicherung des Gesamtsystems erfolgt mit Hilfe von zusätzlichen Listen, welche manuelle verwaltet werden. Die Verfolgung von feingranularen Änderungen, also beispielsweise die Ermittlung des jeweils geänderten Datums bzw. Objekts oder die Ermittlung des Bearbeiters, der die Änderungen vorgenommen hat, kann bisher, aufgrund des erheblichen Aufwands, nur in Ausnahmefällen durchgeführt werden.

Insgesamt betrachtet ermöglichen daher die gegenwärtig verwendeten Lösungen zur Versionsverwaltung von Automatisierungsdaten keine hinreichende und zuverlässige Rückverfolgung von in der Vergangenheit vorgenommenen Änderungen. Eine konsistente Wiederherstellung früherer Datenversionen bzw. Arbeitsstände ist daher oft nicht möglich.

Der Erfindung liegt die Aufgabe zugrunde, ein Verfahren zur Versionsverwaltung von Automatisierungsdaten eines Kraftwerk-Automatisierungssystems anzugeben, das eine lückenlose Rückverfolgung und Wiederherstellung der Versionen sämtlicher Automatisierungsdaten, welche in unterschiedlichen Datenhaltungen auf meist mehreren Plattformen abgelegt sind, ermöglicht.

Diese Aufgabe ist erfindungsgemäß mit dem eingangs genannten Verfahren zur Versionsverwaltung von Automatisierungsdaten eines Kraftwerk-Automatisierungssystems, die auf miteinander vernetzten Plattformen des Kraftwerk-Automatisierungssystem in unterschiedlichen Datenhaltungen abgelegt sind, gelöst, bei dem Versionen wenigstens eines Datums der Automatisierungsdaten mittels eines geeigneten Werkzeugs in ein interoperables Format exportiert werden und die in Form eines interoperablen Formats vorliegende Versionen mittels eines Versionsmanagementsystems verwaltet werden.

Erfindungsgemäß werden die in unterschiedlichen Datenhaltungen abgelegten Datenversionen zunächst in ein einheitliches interoperables Format exportiert, so dass Datenversionen, die zunächst in unterschiedlichen Datenhaltungen abgelegt sind, in Form eines einheitlichen, interoperablen Formats vorliegen, welches dem Versionsmanagementsystem, das ein herkömmliches Konfigurationsmanagementsystem sein kann, die Verwaltung der Datenversionen ermöglicht.

Erfindungsgemäß können daher Datenversionen in unterschiedlichen Datenhaltungen, also etwa Daten, die im Engineering der Kraftwerksautomatisierung erfasst werden, Daten aus abgeleiteten Generier- und Compilerprozessen, relationale Datenbanken, Bilder und Bit-Maps, verschiedene Dateitypen, Mengengerüste der zu verwaltenden Daten, und weitere Daten, wie Standarddaten, die Anzahl der zu verwaltenden Versionen und die Kennzeichnung von Projektständen, Einzeldaten und Objekten nach Export in ein einheitliches interoperables Format von dem Versionsmanagementsystem verwaltet bzw. verarbeitet werden.

Mit der so vorgenommenen Vereinheitlichung der in unterschiedlichen Datenhaltungen abgelegten Datenversionen kann mittels des Versionsmanagementsystems eine lückenlose Rückverfolgung und Wiederherstellung der Versionen sämtlicher Automatisierungsdaten realisiert werden.

Bei einer vorteilhaften Weiterbildung des erfindungsgemäßen Verfahrens werden die in Form eines interoperablen Formats vorliegenden Versionen auf einer zusätzlichen Plattform abgelegt, die mit den Plattformen des Kraftwerk-Automatisierungssystems vernetzt ist und auf der das Versionsmanagementsystem abgelegt ist.

Diese vorteilhafte Weitergestaltung des erfindungsgemäßen Verfahrens ermöglicht, dass die von einzelnen Plattformen des Automatisierungssystems übernommenen Funktionen, wie beispielsweise das Engineering bzw. Software-Engineering keinem möglicherweise störenden Einfluss des Versionsmanagementsystems ausgesetzt sind, der sich beispielsweise nachteilig auf die Rechenleistung auswirken könnte. Die Versionsverwaltung der zuvor mittels eines geeigneten Werkzeugs, wie einem geeigneten Programm, in ein interoperables Format exportierten Datenversionen erfolgt auf einer weiteren Plattform, beispielsweise in Form eines Servers, der mit den Plattformen des Kraftwerk-Automatisierungssystems vernetzt ist und auf dem das Versionsmanagementsystem abgelegt ist.

Bei einer weiteren vorteilhaften Weiterbildung des erfindungsgemäßen Verfahrens werden von dem Versionsmanagementsystem ausschließlich Versionen der Automatisierungsdaten verwaltet, welche in Form von Quelldaten vorliegen.

Auf diese Weise wird erfindungsgemäß das von dem Versionsmanagementsystem zu verwaltende Datenvolumen auf die erfassten Quelldaten begrenzt, was gegenüber bisherigen, bekannten Lösung zur Versionsverwaltung von Automatisierungsdaten deutliche Vorteile mit sich bringt. Bisher war ein Versionsmanagement für die Daten eines Prozessleitsystems bzw. eines Automatisierungssystems auf Grund des hohen Datenvolumens insbesondere abgeleiteter und generierter Daten kaum möglich. Wird jedoch, wie es erfindungsgemäß vorgesehen ist, die zu verwaltende Datenmenge auf die erfassten Quelldaten begrenzt, und werden zusätzlich für verschiedene Versionen ausschließlich die Änderungen verwaltet, wird das Datenvolumen für die Versionsverwaltung hantierbar.

Abgeleitete und generierte Daten können zu jedem Zeitpunkt aus den versionierten Quell-Daten neu erzeugt werden und müssen deshalb nicht in die Versionsverwaltung einbezogen werden. Erfindungsgemäß werden für abgeleitete und generierte Daten die Zustandsübergänge während des Generierens verwaltet, um zu ermitteln, aus welchen Datenquellen generiert wurde, welche Version die Datenquelle besitzt, welche Folgedokumente generiert wurden und welche Daten und welcher Code schließlich in die Zielsysteme geladen wurde. Erfindungsgemäß wird ferner auch der Fehlerstatus der Generier- und Ladevorgänge mittels des Versionsmanagementsystems verwaltet.

Bei einer praktischen Weiterbildung des erfindungsgemäßen Verfahrens werden von dem Versionsmanagementsystem nur eine Basisversion und Änderungen gegenüber früheren Versionen verwaltet, so dass bei einer weiteren praktischen Weiterbildung des erfindungsgemäßen Verfahrens von dem Versionsmanagementsystem eine frühere Version unter Verwendung einer Basisversion und der Änderungen gegenüber der Basisversion ermittelt werden kann und die ermittelte frühere Version anschließend mittels eines geeigneten Werkzeugs in die ursprüngliche Datenhaltung konvertiert und schließlich importiert werden kann.

Auf diese Weise wird erfindungsgemäß die von dem Versionsmanagementsystem zu verwaltende Datenmenge auf eine Basisversion und Änderungen beschränkt, was eine deutliche Verringerung des zu verwaltenden Datenaufkommens mit sich bringt. Zur Wiederherstellung einer früheren Datenversion werden von dem Versionsmanagementsystem, ausgehend von der Basisversion, die Änderungen vorzugsweise inkrementell verfolgt bzw. rückgängig gemacht, welche ausgehend von der früheren Version zu der Basisversion geführt haben. Die so erfindungsgemäß ermittelte frühere Version kann anschließend mittels eines geeigneten Werkzeugs, vorzugsweise in Form eines Programms bzw. Programmabschnitts, in die ursprüngliche Datenhaltung konvertiert und schließlich importiert werden.

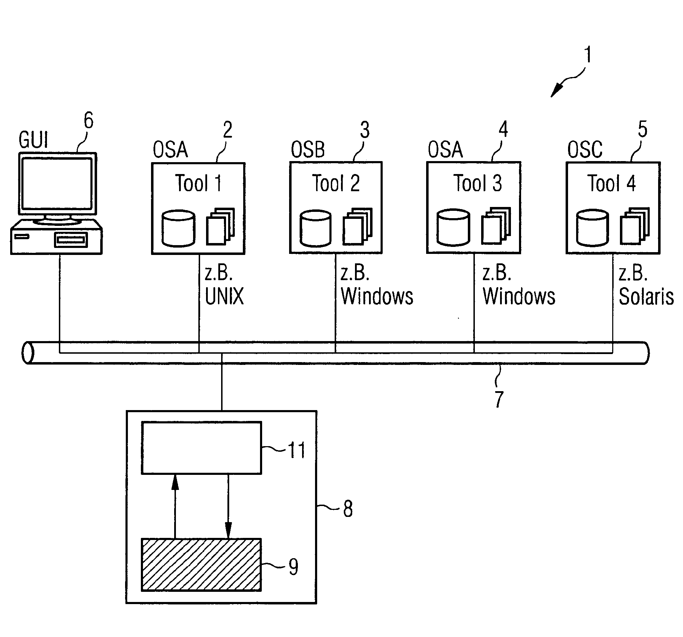

Nachfolgend wird das erfindungsgemäße Verfahren anhand eines in Fig. 1 schematisch dargestellten Kraftwerk-Automatisierungssystems in Form eines Engineering-Systems näher erläutert.

Das in Fig. 1 dargestellte Engineering-System 1 umfasst mehrere Plattformen 2, 3, 4 und 5, die über ein Netzwerk 7, vorzugsweise vom Typ Ethernet, miteinander vernetzt sind. Auf den einzelnen Plattformen 2, 3, 4 und 5 sind jeweils unterschiedliche Funktionen abgelegt, die später im Zielsystem für die Automatisierung des Kraftwerkbetriebs benötigt werden.

So ist z.B. auf der Plattform 3, die als Personalcomputer mit dem Betriebssystem Windows ausgebildet ist, eine für das technologische Engineering erforderliche, Windows-basierte Funktion des Typs TEC4 abgelegt. Wesentliche Daten sind auf der Plattform 3 in einer relationalen Datenbank, wie beispielsweise MS-Access oder MS-SQL abgelegt. Ferner werden Daten in einem Graphik-Format oder im HTML-Format gehalten, und weitere Daten im Windows-Dateisystem.

Auf der Unix basierten Plattform 2 ist z.B. eine Funktion zur Funktionsplanerstellung auf Basis des technologischen Engineerings für das Kraftwerk abgelegt, und zwar vorzugsweise eine Funktion des Typs ES680.

Der überwiegende Anteil der resultierenden Engineering-Daten wird in einer Ingres-Datenbank abgelegt. Die Anlagentopologie und damit auch das Engineering der gesamten Vernetzung der Anlage wird mit Hilfe eines ES680-Topologieplans vorgenommen, wobei alle Daten in der Ingres-Datenhaltung abgelegt werden. Ferner erfolgt unter Verwendung des ES680-Topologieplans die Definition und Belegung der Automatisierungs-Hardware sowie der zugeordneten Hardwaredispositionspläne und Baugruppenbelegungspläne. Auch hier werden alle relevanten Daten in der Ingres-Datenhaltung abgelegt.

Die Konstruktion der Anlagenbilder und Prozessbilder sowie die Anbindung an den Prozess erfolgt aufgabenabhängig unter Verwendung eines auf Plattform 4 abgelegten Editors des Typs OM690 oder OM650. Die Daten werden in einer Unix Graphik-Datenhaltung abgelegt. Alternativ kann zur komfortablen Erstellung ein Windows basierter OM-Editor eingesetzt werden. Die Prozessanbindung wird vom System auf der Basis von Attributen generiert. Auf Plattform 5 ist eine weitere Funktion des Typs OM-DAMO abgelegt.

Folgende Plattformen können eingesetzt werden: HP mit HP-UX, PC mit Windows, PC mit SCO Unix, PC mit DOS und SUN mit Solaris.

Das von den obigen Funktion belegte Datenvolumen liegt in der Größenordnungen von einigen hundert Megabyte. Beispielhaft ermittelte Datenvolumina sind 400 Megabyte für die TEC4-Funktion, 300 Megabyte für die ES680-Funktion, 250 Megabyte für die OM-Funktion und 400 Megabyte für die TEC4FDE-Funktion, mit einem resultierenden gesamten Datenvolumen von 1,35 Gigabyte. Ein Versionsverwaltung eines derart hohen Datenvolumens kann nur mittels des oben näher dargelegten, erfindungsgemäßen Verfahrens zur Versionsverwaltung von Automatisierungsdaten realisiert werden. Für Kernkraftwerke liegen die Schätzungen für das für die Versionsverwaltung relevante Datenvolumen sogar bei ca. 8 Gigabyte pro Version.

Mittels des dargestellten Monitors 6 wird eine entsprechende Graphikschnittstelle (GUI), vorzugsweise des Typs CM4DCS symbolisiert.

Die einzelnen Plattformen 2, 3, 4 und 5 und die Graphikschnittstelle 6 sind über das Netzwerk 7 mit einem separaten Server 8 zur Versionsveraltung der auf den einzelnen Plattformen 2, 3, 4 und 5 befindlichen Daten vernetzt. Auf dem Server sind ein Versionsmanagementsystem 9 in Form eines herkömmlichen "Konfiguration-Management-Systems und eine Programmierschnittstelle 11 (API) abgelegt. Auf den einzelnen Plattformen 2, 3, 4 und 5 in unterschiedlichen Datenhaltungen abgelegte Datenversionen werden zur Versionsverwaltung, nachdem sie mittels eines geeigneten Softwarewerkzeugs in ein interoperables Format exportiert worden sind, in das auf dem Server 8 abgelegte Versionsmanagementsystem 9 übertragen.

Bei dem in Fig. 1 dargestellten Engineering-System 1 handelt es sich um ein Engineering-System für ein DCS (Abk. für "Distributed Control System"), wobei das auf dem Server 8 abgelegte Versionsmanagementsystem 9 in Form eines "Konfiguration Management-Systems" folgende Funktionen aufweist:
- Hinzufügen von Objekten,
- Entfernen von Objekten (nur mit besonderer Freigabe),
- Bildung von Objektversionen,
- "Aus-Checken" einer vorherigen Objektversion,
- Vergleichen von Objektversionen,
- Bildung übergreifender Versionen (also Objekte von unterschiedlichen Funktionen bzw. Werkzeugen),
- Erzeugung einer Versionsliste für ein DCS-Objekt,
- Erzeugung einer Versionsliste von übergreifenden Versionen,
- Erzeugen einer Historie für ein DCS-Objekt,
- Erzeugen einer Historie für eine übergreifende Version, und
- Transferunterstützung.

Das Konfiguration-Management-System 9 basiert auf der Verwaltung von Dateien und weist Schnittstellen für verschiedene Betriebssystemplattformen (z.B. Windows oder Unix)auf. Es ist ein separates Hilfsprogramm für die Versionsverwaltung der Daten, insbesondere der Engineering-Daten, der oben näher beschriebenen Funktionen (TEC4, ES680 und OM690), und basiert auf einer Verwaltung von ASCII- und Binärdateien. Die auf den einzelnen Plattformen 2, 3, 4 und 5 abgelegten Daten, insbesondere Engineering-Daten (auch DCS-Objekte genannt), liegen im allgemeinen nicht als Dateien vor, sondern sind in Datenbanken gespeichert. Damit das Konfiguration-Management-System 9 die einzelnen Datenversionen verwalten kann, müssen diese als Dateien in Form von ASCII- oder Binärdateien vorliegen. Daher sind die obigen Funktionen (TEC4, ES680 und OM690) dazu ausgebildet, die entsprechenden Datenbankobjekte (also insbesondere Engineering-Daten) in Dateien in Form von ASCII- oder Binärdateien zu konvertieren und in ein Dateisystem des Konfiguration-Management-Systems 9 zu exportieren, so dass sie dem Konfiguration-Management-System 9 für die Versionsverwaltung zur Verfügung stehen. Kennungen identifizieren und legen die Zugehörigkeit zu einer vorgegebenen Version bzw. DCS-Objektversion fest.

Die Bearbeitung bestimmter Versionen von Engineering-Daten (DCS-Objekten) erfolgt mittels einer Arbeitsversion unter der Verwendung der obigen, auf den einzelnen Plattformen 2, 3, 4 und 5 abgelegten Funktionen (TEC4, ES680 und OM690). Ist die zu bearbeitende Version bereits im Konfiguration-Management-System 9 enthalten, wird sie zunächst mittels einer "Aus-Check"-Funktion aus dem interoperablen Format (in Form von ASCII- oder Binärdateien) in die ursprüngliche Datenhaltung konvertiert und schließlich in die zugehörige Datenbank, die auf einer der Plattformen 2, 3, 4 und 5 abgelegt ist, importiert. Die auf den einzelnen Plattformen 2, 3, 4 und 5 abgelegten Funktionen (TEC4, ES680 und OM690) arbeiten stets auf einer lokalen Kopie. Hier können alle Funktionalitäten, insbesondere auch Konsistenzprüfungen für die zur Bearbeitung freigegebene Version ausgeführt werden.

Insgesamt betrachtet ermöglicht der oben dargelegte Export/Import der Anwendungsdaten eine leichtere Datenbearbeitung, wobei das Konfiguration-Management-System 9 den Vergleich von verschiedenen Objektversionen ermöglicht und das resultierende "Delta" an die einzelnen Funktionen (TEC4, ES680 und OM690) zurückgibt.

## Patentansprüche

1. Verfahren zur Versionsverwaltung von Automatisierungsdaten eines Kraftwerk-Automatisierungssystems (1), die auf miteinander vernetzten Plattformen (2, 3, 4, 5) des Kraftwerk-Automatisierungssystem (1) in unterschiedlichen Datenhaltungen abgelegt sind, bei dem Versionen wenigstens eines Datums der Automatisierungsdaten mittels eines geeigneten Werkzeugs in ein interoperables Format exportiert werden und die in Form eines interoperablen Formats vorliegenden Versionen mittels eines Versionsmanagementsystems (9) verwaltet werden.

2. Verfahren nach Anspruch 1, **dadurch gekennzeichnet, dass** die in Form eines interoperablen Formats vorliegenden Versionen auf einer zusätzlichen Plattform (8) abgelegt werden, die mit den Plattformen (2, 3, 4, 5) des Kraftwerk-Automatisierungssystems (1) vernetzt ist und auf der das Versionsmanagementsystem (9) abgelegt ist.

3. Verfahren nach Anspruch 1 oder 2, **dadurch gekennzeichnet, dass** von dem Versionsmanagementsystem (9) ausschließlich Versionen verwaltet werden, welche in Form von Quelldaten vorliegen.

4. Verfahren nach einem der Ansprüche 1 bis 3, **dadurch gekennzeichnet, dass** von dem Versionsmanagementsystem (9) nur eine Basisversion und Änderungen gegenüber früheren Versionen verwaltet werden.

5. Verfahren nach einem der Ansprüche 1 bis 4, **dadurch gekennzeichnet, dass** von dem Versionsmanagementsystem (9) eine frühere Version unter Verwendung einer Basisversion und der Änderungen gegenüber der Basisversion ermittelt wird und die ermittelte frühere Version anschließend mittels eines geeigneten Werkzeugs in die ursprüngliche Datenhaltung konvertiert und schließlich importiert wird.
